(19) Europäisches Patentamt
European Patent Office
Office européen des brevets

(11) EP 1 694 125 B1

(12) # EUROPÄISCHE PATENTSCHRIFT

(45) Veröffentlichungstag und Bekanntmachung des Hinweises auf die Patenterteilung:
**02.04.2008 Patentblatt 2008/14**

(21) Anmeldenummer: **04803614.9**

(22) Anmeldetag: **08.12.2004**

(51) Int Cl.:
***A01N 43/90*** $^{(2006.01)}$ ***A01N 37/06*** $^{(2006.01)}$

(86) Internationale Anmeldenummer:
**PCT/EP2004/013936**

(87) Internationale Veröffentlichungsnummer:
**WO 2005/055721 (23.06.2005 Gazette 2005/25)**

(54) **FUNGIZIDE MISCHUNGEN**
FUNGICIDAL MIXTURES
MELANGES FONGICIDES

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**LV**

(30) Priorität: **10.12.2003 DE 10358073**

(43) Veröffentlichungstag der Anmeldung:
**30.08.2006 Patentblatt 2006/35**

(73) Patentinhaber: **BASF SE**
**67056 Ludwigshafen (DE)**

(72) Erfinder:
- **TORMO I BLASCO, Jordi**
**69514 Laudenbach (DE)**
- **GROTE, Thomas**
**67157 Wachenheim (DE)**
- **SCHERER, Maria**
**76829 Godramstein (DE)**
- **STIERL, Reinhard**
**67251 Freinsheim (DE)**
- **STRATHMANN, Siegfried**
**67117 Limburgerhof (DE)**
- **SCHÖFL, Ulrich**
**68782 Brühl (DE)**

(56) Entgegenhaltungen:
**WO-A-98/46607**

EP 1 694 125 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft fungizide Mischungen, enthaltend als aktive Komponenten

(1) das Triazolopyrimidinderivat der Formel I,

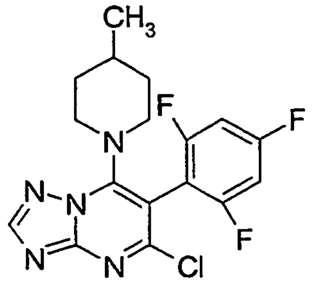

I

und

(2) Dinocap der Formel II, bestehend aus den Dintrophenolderivaten der Formeln IIa und IIb,

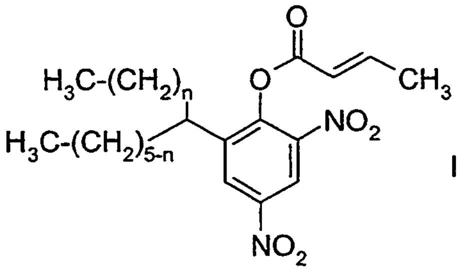

IIa

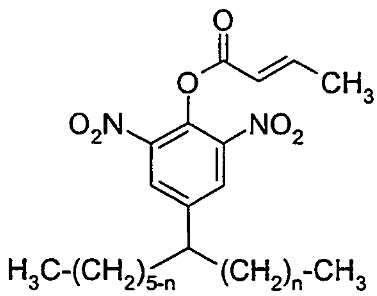

IIb

wobei n für 0, 1 oder 2 steht,

in einer synergistisch wirksamen Menge.

Außerdem betrifft die Erfindung ein Verfahren zur Bekämpfung von Schadpilzen mit Mischungen der Verbindung I mit dem Mischprodukt II und die Verwendung der Verbindung I mit dem Mischprodukt II zur Herstellung derartiger Mischungen sowie Mittel, die diese Mischungen enthalten.

Die Verbindung I, 5-Chlor-7-(4-methyl-piperidin-1-yl)-6-(2,4,6-trifluor-phenyl)-[1,2,4]triazolo[1,5-a]pyrimidin, ihre Herstellung und deren Wirkung gegen Schadpilze ist aus der Literatur bekannt (WO 98/46607).

Mischungen von Triazolopyrimidinderivaten mit anderen Wirkstoffen sind allgemein aus EP-A 988 790 und US 6 268 371 bekannt.

Die in EP-A 988 790 beschriebenen synergistischen Mischungen werden als fungizid wirksam gegen verschiedene Krankheiten von Getreide, Obst und Gemüse, insbesondere Mehltau an Weizen und Gerste oder Grauschimmel an Äpfeln beschrieben.

Die in US 6 268 371 beschriebenen Mischungen werden als besonders gegen Reiskrankheiten wirksam beschrieben.

Das Mischprodukt II, bestehend aus den Verbindungen IIa und IIb, 2,6-Dinitro-4-octylphenylcrotonat und 2,4-Dinitro-6-octylphenylcrotonat, wobei "Octyl" eine Mischung aus 1-Methylheptyl, 1-Ethylhexyl und 1-Propylpentyl bedeutet, ihre Herstellung und deren Wirkung gegen Schadpilze ist ebenfalls aus der Literatur bekannt (US 2 526 660 und US 2 810 767; common name: Dinocap) und seit langem als Fungizid gegen Mehltauerkrankungen im Markt etabliert.

Die fungizide Wirkung der bekannten Mischungen kann nicht immer völlig befriedigen. Insbesondere deren Wirkung gegen Schadpilze aus der Klasse der *Oomyceten* lässt zu wünschen übrig.

Praktische Erfahrungen in der Landwirtschaft haben gezeigt, dass der wiederholte und ausschließliche Einsatz eines Einzelwirkstoffs bei der Bekämpfung von Schadpilzen in vielen Fällen zur schnellen Selektion von solchen Pilzstämmen führt, die gegen den betreffenden Wirkstoff eine natürliche oder adaptierte Resistenz entwickelt haben. Eine wirksame Bekämpfung dieser Pilze mit dem betreffenden Wirkstoff ist dann nicht mehr möglich.

Um die Gefahr der Selektion von resistenten Pilzstämmen zu verringern, werden heutzutage zur Bekämpfung

von Schadpilzen bevorzugt Mischungen verschiedener Wirkstoffe eingesetzt. Durch Kombination von Wirkstoffen mit unterschiedlichen Wirkungsmechanismen kann der Bekämpfungserfolg über längere Zeit gesichert werden.

Im Hinblick auf effektives Resistenzmanagement und eine wirkungsvolle Bekämpfung von Schadpilzen bei möglichst geringen Aufwandmengen lagen der vorliegenden Erfindung Mischungen als Aufgabe zugrunde, die bei möglichst geringer Gesamtmenge an ausgebrachten Wirkstoffen eine ausreichende Wirkung gegen die Schadpilze zeigen.

Demgemäss wurden die eingangs definierten Mischungen gefunden. Es wurde außerdem gefunden, dass sich bei gleichzeitiger gemeinsamer oder getrennter Anwendung der Verbindung I und Dinocap II oder bei Anwendung der Verbindung I und Dinocap II nacheinander Schadpilze besser bekämpfen lassen als mit den jeweiligen Einzelkomponenten (1), bzw. (2) (synergistische Mischungen).

Die Mischungen der Verbindung I und Dinocap der Formel II bzw. die gleichzeitige gemeinsame oder getrennte Verwendung der Verbindung I und Dinocap der Formel II zeichnen sich aus durch eine hervorragende Wirksamkeit gegen ein breites Spektrum von pflanzenpathogenen Pilzen, insbesondere aus der Klasse der *Ascomyceten, Deuteromyceten, Oomyceten* und *Basidiomyceten*. Sie können im Pflanzenschutz als Blatt- und Bodenfungizide eingesetzt werden.

Besondere Bedeutung haben sie für die Bekämpfung einer Vielzahl von Pilzen an verschiedenen Kulturpflanzen wie Bananen, Baumwolle, Gemüsepflanzen (z.B. Gurken, Bohnen und Kürbisgewächse), Gerste, Gras, Hafer, Kaffee, Kartoffeln, Mais, Obstpflanzen, Reis, Roggen, Soja, Tomaten, Wein, Weizen, Zierpflanzen, Zuckerrohr und einer Vielzahl von Samen.

Insbesondere eignen sie sich zur Bekämpfung der folgenden pflanzenpathogenen Pilze: *Blumeria graminis* (echter Mehltau) an Getreide, *Erysiphe cichoracearum* und *Sphaerotheca fuliginea* an Kürbisgewächsen, *Podosphaera leucotricha* an Äpfeln, *Uncinula necator* an Reben, *Puccinia*-Arten an Getreide, *Rhizoctonia*-Arten an Baumwolle, Reis und Rasen, *Ustilago*-Arten an Getreide und Zuckerrohr, *Venturia inaequalis* an Äpfeln, *Bipolaris*- und *Drechslera*-Arten an Getreide, Reis und Rasen, *Septoria nodorum* an Weizen, *Botrytis cinerea* an Erdbeeren, Gemüse, Zierpflanzen und Reben, *Mycosphaerella*-Arten an Bananen, Erdnüssen und Getreide, *Pseudocercosporella herpotrichoides* an Weizen und Gerste, *Pyricularia oryzae* an Reis, *Phytophthora infestans* an Kartoffeln und Tomaten, *Pseudoperonospora*-Arten an Kürbisgewächsen und Hopfen, *Plasmopara viticola* an Reben, *Alternaria*-Arten an Gemüse und Obst sowie *Fusarium*- und *Verticillium*-Arten.

Sie sind außerdem im Materialschutz (z.B. Holzschutz) anwendbar, beispielsweise gegen *Paecilomyces variotii*.

Die erfindungsgemäßen Mischungen sind besonders zur Bekämpfung von Schadpilzen aus der Klasse der *Oomyceten* geeignet.

Das biologische Verhalten von *Oomyceten* weicht deutlich von dem der *Ascomyceten*, *Deuteromyceten*, und *Basidiomyceten* ab, denn *Oomyceten* sind biologisch eher mit Algen als mit Pilzen verwandt. Daher sind Erkenntnisse zur fungiziden Aktivität von Wirkstoffen gegen "echte Pilze", wie *Ascomyceten, Deuteromyceten,* und *Basidiomyceten* nur eingeschränkt auf *Oomyceten* übertragbar.

*Oomyceten* verursachen wirtschaftlich bedeutsame Schäden an verschiedenen Kulturpflanzen. In vielen Regionen stellen Infektionen durch *Phytophthora infestans* im Kartoffel- und Tomatenanbau die bedeutendsten Pflanzenkrankheiten dar. Im Weinbau werden erhebliche Schäden durch Rebenperonospora verursacht.

Bevorzugt setzt man bei der Bereitstellung der Mischungen den reinen Wirkstoff der Formel I und der Formeln IIa und IIb ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Als weitere Wirkstoffe im voranstehenden Sinne kommen insbesondere Fungizide ausgewählt aus der folgenden Gruppe in Frage:

- Acylalanine wie Benalaxyl, Ofurace, Oxadixyl,
- Aminderivate wie Aldimorph, Dodemorph, Fenpropidin, Guazatine, Iminoctadine, Tridemorph,
- Anilinopyrimidine wie Pyrimethanil, Mepanipyrim oder Cyprodinil,
- Antibiotika wie Cycloheximid, Griseofulvin, Kasugamycin, Natamycin, Polyoxin oder Streptomycin,
- Azole wie Bitertanol, Bromoconazol, Cyproconazol, Difenoconazole, Dinitroconazol, Enilconazol, Epoxiconazol, Fenbuconazol, Fluquiconazol, Flusilazol, Flutriafol, Hexaconazol, Imazalil, Ipconazol, Metconazol, Myclobutanil, Penconazol, Propiconazol, Prochloraz, Prothioconazol, Simeconazol, Tetraconazol, Triadimefon, Triadimenol, Triflumizol, Triticonazol,
- Dicarboximide wie Myclozolin, Procymidon,
- Dithiocarbamate wie Ferbam, Nabam, Metam, Propineb, Polycarbamat, Ziram, Zineb,
- Heterocylische Verbindungen wie Anilazin, Boscalid, Oxycarboxin, Cyazofamid, Dazomet, Famoxadon, Fenamidon, Fuberidazol, Flutolanil, Furametpyr, Isoprothiolan, Mepronil, Nuarimol, Probenazol, Pyroquilon, Silthiofam, Thiabendazol, Thifluzamid, Tiadinil, Tricyclazol, Triforine,

- Nitrophenylderivate wie Binapacryl, Dinobuton, Nitrophthal-isopropyl,
- Sonstige Fungizide wie Acibenzolar-S-methyl, Carpropamid, Cyflufenamid, Cymoxanil, Diclomezin, Diclocymet, Diethofencarb, Edifenphos, Ethaboxam, Fentin-Acetat, Fenoxanil, Ferimzone, Fosetyl, Hexachlorbenzol, Metrafenon, Pencycuron, Propamocarb, Phthalid, Toloclofos-methyl, Quintozene, Zoxamid,
- Strobilurine wie Fluoxastrobin, Metominostrobin, Orysastrobin oder Pyraclostrobin,
- Sulfensäurederivate wie Captafol,
- Zimtsäureamide und Analoge wie Flumetover.

In einer Ausführungsform der erfindungsgemäßen Mischungen werden den Verbindungen I und II ein weiteres Fungizid III oder zwei Fungizide III und IV beigemischt. Mischungen der Verbindungen I und II mit einer Komponente III sind bevorzugt. Besonders bevorzugt sind Mischungen der Verbindungen I und II.

Die Verbindung I und Dinocap der Formel I können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindung I und Dinocap der Formel II werden üblicherweise in einem Gewichtsverhältnis von 100:1 (I: II) bis 1:100, vorzugsweise 10:1 bis 1:50, insbesondere 5:1 bis 1:20 angewandt.

Die Komponenten III und ggf. IV werden gewünschtenfalls im Verhältnis von 20:1 bis 1:20 zu der Verbindung I zugemischt.

Die Aufwandmengen der erfindungsgemäßen Mischungen liegen je nach Art der Verbindung und des gewünschten Effekts bei 5 g/ha bis 4000 g/ha, vorzugsweise 100 bis 1500 g/ha, insbesondere 100 bis 1000 g/ha.

Die Aufwandmengen für die Verbindung I liegt entsprechend in der Regel bei 1 bis 1000 g/ha, vorzugsweise 10 bis 750 g/ha, insbesondere 20 bis 500 kg/ha.

Die Aufwandmengen für Dinocap der Formel II liegt entsprechend in der Regel bei 1 bis 3000 g/ha, vorzugsweise 100 bis 1500 g/ha, insbesondere 100 bis 1000 kg/ha.

Bei der Saatgutbehandlung werden im allgemeinen Aufwandmengen an Mischung von 1 bis 1000 g/100 kg Saatgut, vorzugsweise 1 bis 200 g/100 kg, insbesondere 5 bis 100 g/100 kg verwendet.

Sofern für Pflanzen pathogene Schadpilze zu bekämpfen sind, erfolgt die getrennte oder gemeinsame Applikation der Verbindung I und Dinocap der Formel II oder der Mischungen aus der Verbindung I und Dinocap II durch Besprühen oder Bestäuben der Samen, der Pflanzen oder der Böden vor oder nach der Aussaat der Pflanzen oder vor oder nach dem Auflaufen der Pflanzen. Bevorzugt erfolgt die Anwendung der Verbindungen durch Besprühen der Blätter.

Die erfindungsgemäßen Mischungen, bzw. die Verbindung I und Dinocap der Formel II können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie LigninSulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht. Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)

10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

B) Dispergierbare Konzentrate (DC)

20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C) Emulgierbare Konzentrate (EC)

15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)

40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)

20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG)

50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP)

75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)

5 Gew.Teile der Wirkstoffe werden fein gemahlen und mit 95 % feinteiligem Kaolin innig vermischt. Man erhält dadurch ein Stäubmittel.

I) Granulate (GR, FG, GG, MG)

0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.

J) ULV- Lösungen (UL)

10 Gew.-Teile der Wirkstoffe werden in einem organischen Lösungsmittel z.B. Xylol gelöst. Dadurch erhält man ein Produkt für die Direktapplikation.

Die Wirkstoffe können als solche, in Form ihrer Formulierungen oder den daraus bereiteten Anwendungsformen, zB. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel werden üblicherweise zu den erfindungsgemäßen Mitteln im Gewichtsverhältnis 1:10 bis 10: 1 zugemischt.

Die Verbindungen I und IIa und IIb, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und IIa und IIb bei getrennter Ausbringung, behandelt. Die Anwendung kann vor oder nach dem Befall durch die Schadpilze erfolgen.

Die fungizide Wirkung der Verbindung und der Mischungen lässt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Anwendungsbeispiel - Wirksamkeit gegen Rebenperonospora verursacht durch *Plasmopara viticola*

Blätter von Topfreben wurden mit wässriger Suspension in der unten angegebenen Wirkstoffkonzentration bis zur Tropfnässe besprüht. Am folgenden Tag wurden die Unterseiten der Blätter mit einer wässrigen Sporangienaufschwemmung von *Plasmopara viticola* inokuliert. Danach wurden die Reben zunächst für 48 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

α entspricht dem Pilzbefall der behandelten Pflanzen in % und
β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22,1967) ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | - | Kontrolle (unbehandelt) | (92 % Befall) |
| 2 | I | 16 | 56 |
| 3 | II (Dinocap) | 63<br>16<br>4 | 2<br>2<br>2 |

Tabelle B - erfindungsgemäße Mischungen

| Beispiel | Wirkstoffmischung Konzentration Mischungsverhältnis | beobachteter Wirkungsgrad | berechneter Wirkungsgrad*) |
|---|---|---|---|
| 4 | I+II<br>16+4 ppm<br>4:1 | 84 | 57 |
| 5 | I+II<br>16+16 ppm<br>1:1 | 84 | 57 |
| 6 | I+II<br>16+63 ppm<br>1:4 | 89 | 57 |
| *) berechneter Wirkungsgrad nach der Colby-Formel | | | |

Aus den Ergebnissen der Versuche geht hervor, dass der beobachtete Wirkungsgrad der erfindungsgemäßen Mischungen in allen Mischungsverhältnissen deutlich höher ist, als nach der Colby-Formel vorausberechnet.

## Patentansprüche

1. Fungizide Mischungen, enthaltend als aktive Komponenten

   (1) das Triazolopyrimidinderivat der Formel I,

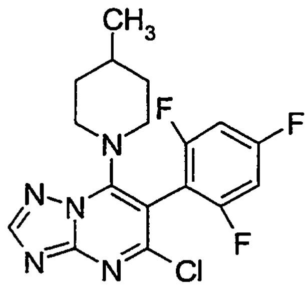

I

   und
   (2) das Dinocap der Formel II, bestehend aus den Dintrophenolderivaten der Formeln IIa und IIb,

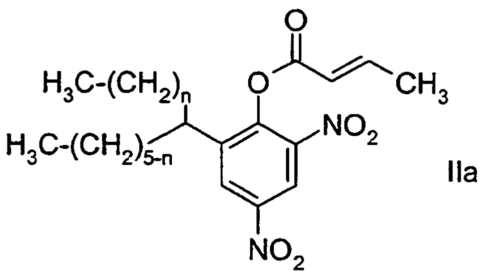

IIa

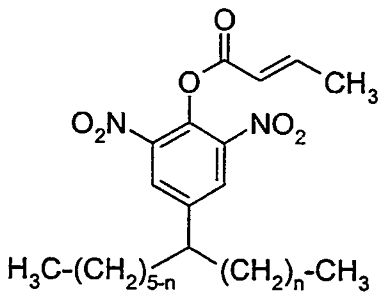

IIb

   wobei n für 0, 1 oder 2 steht,

   in einer synergistisch wirksamen Menge.

2. Fungizide Mischungen, enthaltend die Verbindung der Formel I und das Mischprodukt II in einem Gewichtsverhältnis von 100:1 bis 1:100.

3. Mittel, enthaltend einen flüssigen oder festen Trägerstoff und eine Mischung gemäß Anspruch 1 oder 2.

4. Verfahren zur Bekämpfung von Schadpilzen aus der Klasse der *Oomyceten,* **dadurch gekennzeichnet, dass** man die Pilze, deren Lebensraum oder die vor Pilzbefall zu schützenden Pflanzen, den Boden oder Saatgüter mit einer wirksamen Menge der Verbindung I und Dinocap II gemäß Anspruch 1 behandelt.

5. Verfahren nach Anspruch 4, **dadurch gekennzeichnet, dass** man die Verbindungen I und IIa und IIb gemäß Anspruch 1 gleichzeitig, und zwar gemeinsam oder getrennt, oder nacheinander ausbringt.

6. Verfahren nach Anspruch 4, **dadurch gekennzeichnet, dass** man die Mischung gemäß Ansprüchen 1 oder 2 auf die vor Pilzbefall zu schützenden Pflanzen oder den Boden in einer Menge von 5 g/ha bis 4000 g/ha aufwendet.

7. Verfahren nach Ansprüchen 4 und 5, **dadurch gekennzeichnet, dass** man die Mischung gemäß Ansprüchen 1 oder 2 in einer Menge von 1 bis 1000 g/100 kg Saatgut anwendet.

**8.** Verfahren nach Ansprüchen 4 bis 7, **dadurch gekennzeichnet, dass** der Schadpilz *Plasmopara viticola* bekämpft wird.

**9.** Saatgut, enthaltend die Mischung gemäß Ansprüchen 1 oder 2 in einer Menge von 1 bis 1000 g/100 kg.

**10.** Verwendung der Verbindung I und des Mischproduktes II gemäß Anspruch 1 zur Herstellung eines zur Bekämpfung von *Oomyceten* geeigneten Mittels.

## Claims

**1.** A fungicidal mixture comprising, as active components,

(1) the triazolopyrimidine derivative of the formula I

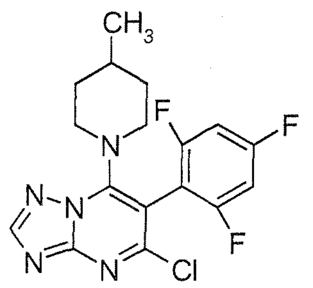

I

and

(2) the dinocap of the formula II consisting of the dinitrophenol derivatives of the formulae IIa and IIb

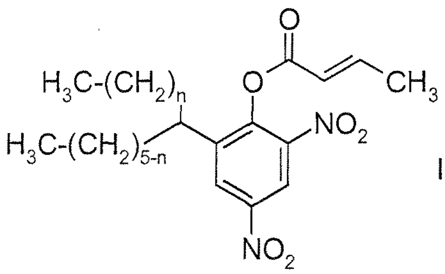

IIa

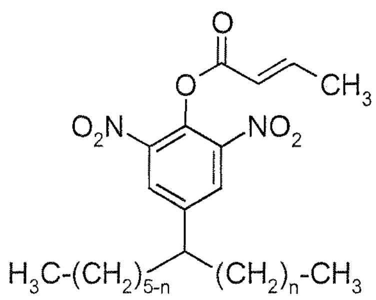

IIb

where n is 0, 1 or 2,

in a synergistically effective amount.

**2.** The fungicidal mixture, comprising the compound of the formula I and the mixed product II in a weight ratio of from 100:1 to 1:100.

**3.** A composition comprising a liquid or solid carrier and a mixture according to claim 1 or 2.

**4.** A method for controlling harmful fungi from the class of the *Oomycetes*, which comprises treating the fungi, their habitat or the seed, the soil or the plants to be protected against fungal attack with an effective amount of the compound I and dinocap II according to claim 1.

**5.** The method according to claim 4, wherein the compounds I and IIa and IIb according to claim 1 are applied simultaneously, that is jointly or separately, or in succession.

**6.** The method according to claim 4,, wherein the mixture according to claim 1 or 2 is applied to the soil or the plants

to be protected against fungal attack in an amount of from 5 g/ha to 4 000 g/ha.

**7.** The method according to claims 4 and 5, wherein the mixture according to claim 1 or 2 is applied in an amount of from 1 to 1000 g/100 kg of seed.

**8.** The method according to claims 4 to 7, wherein the harmful fungus *Plasmopara viticola* is controlled.

**9.** Seed comprising the mixture according to claim 1 or 2 in an amount of from 1 to 1000 g/100 kg.

**10.** The use of the compound I and the mixed product II according to claim 1 for preparing a composition adapted for controlling Oomycetes.

## Revendications

**1.** Mélanges fongicides contenant en tant que composants actifs :

(1)le dérivé de triazolopyrimidine de la formule I

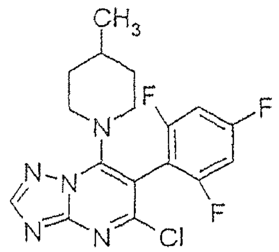

I

et
(2)le dinocap de la formule II, consistant en les dérivés de dinitrophénol des formules IIa et IIb

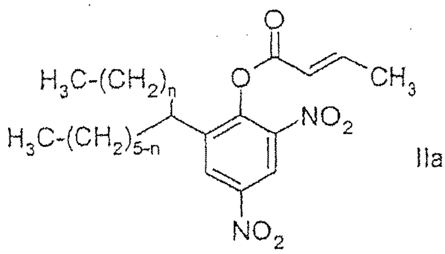

IIa

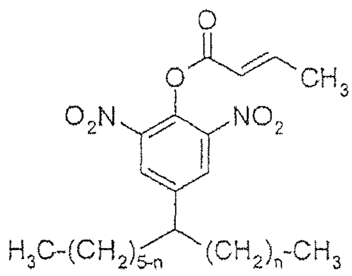

IIb

dans lesquelles n représente 0, 1 ou 2,
en une quantité synergiquement active.

**2.** Mélanges fongicides, contenant le composé de la formule I et le produit mixte II en un rapport pondéral de 100 : 1 à 1 : 100.

**3.** Agents contenant une substance de support liquide ou solide et un mélange suivant la revendication 1 ou 2.

**4.** Procédé de lutte contre des champignons nuisibles de la classe des oomycètes, **caractérisé en ce que** l'on traite les champignons, leur habitat ou les plantes, sols ou semences à protéger de l'attaque des champignons par une quantité efficace du composé I et du dinocap II suivant la revendication 1.

**5.** Procédé suivant la revendication 4, **caractérisé en ce que** l'on épand les composés I et IIa et IIb suivant la revendication 1 en même temps, et à savoir ensemble ou séparément, ou successivement.

6. Procédé suivant la revendication 4, **caractérisé en ce que** l'on applique le mélange suivant la revendication 1 ou 2 sur les plantes ou les sols à protéger de l'attaque des champignons en une quantité de 5 g/ha à 4000 g/ha.

7. Procédé suivant les revendications 4 et 5, **caractérisé en ce que** l'on utilise le mélange suivant la revendication 1 ou 2 en une quantité de 1 à 1000 g/100 kg de semence.

8. Procédé suivant les revendications 4 à 7, **caractérisé en ce que** l'on combat le champignon nuisible *Plasmopara viticola*.

9. Semence contenant le mélange suivant la revendication 1 ou 2 en une quantité de 1 à 1000 g/100 kg.

10. Utilisation du composé I et du produit mixte II suivant la revendication 1 pour la préparation d'un agent adapté pour lutter contre les Oomycetes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9846607 A
- EP 988790 A
- US 6268371 B
- US 2526660 A
- US 2810767 A